(19) Europäisches Patentamt / European Patent Office / Office européen des brevets

(11) **EP 3 570 004 A1**

(12) **EUROPEAN PATENT APPLICATION**

(43) Date of publication:
**20.11.2019 Bulletin 2019/47**

(51) Int Cl.:
***G01N 15/06*** *(2006.01)*

(21) Application number: **18172915.3**

(22) Date of filing: **17.05.2018**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Max-Planck-Gesellschaft zur Förderung der Wissenschaften e.V.
80539 München (DE)**

(72) Inventors:
• **MA, Nan
04318 Leipzig (DE)**
• **SU, Hang
55122 Mainz (DE)**
• **CHENG, Yafang
55122 Mainz (DE)**
• **PÖSCHL, Ulrich
55131 Mainz (DE)**

(74) Representative: **Richardt Patentanwälte PartG mbB
Wilhelmstraße 7
65185 Wiesbaden (DE)**

(54) **A SUPERSATURATION SCANNING CCN ACTIVITY METER**

(57) The invention relates to an apparatus (104) for determining the concentration of cloud condensation nuclei over a first range (243) of supersaturations. The apparatus (104) comprises a thermal diffusion chamber (131) comprising means maintaining a second range (240) of supersaturations in the chamber (131). The apparatus (104) comprising an inlet unit (130) comprising a first inlet (213) . The first inlet (213) comprises an upper end opening (209) for receiving an aerosol flow and a lower end opening (211), wherein the lower end opening (209) is wider than the upper end opening (211), wherein the lower end opening (209) is configured for directing the aerosol flow into the chamber (131) and exposing the aerosol flow to a sub-range (243) of supersaturations of the second range (240). The sub-range is the first range (243). The apparatus (104) further comprises an optical particle counter (136) at an outlet of the chamber (131) for determining the number concentration of the cloud condensation nuclei in the aerosol flow.

**Fig. 2A**

EP 3 570 004 A1

**Description**

**Technical field**

The invention relates to aerosol measurements, and more particularly, to an inlet unit for a cloud condensation nuclei activity meter.

**Background and related art**

Atmospheric aerosol particles serving as cloud condensation nuclei (CCN) influence the cloud formation process and play an important role in regulating the radiative budget of the earth system. CCN are particularly important in climate studies because they are hygroscopic and represent the particles on which cloud droplets form. The ability of an aerosol particle to act as a CCN depends on the extent to which it receives water vapor, which is determined by the size, composition, and mixing state of the particle. This CCN activity is a physical property of aerosol particles that can be used in predicting CCN number concentration and addressing cloud-related effects in numerical models. The CCN activity can be quantified by the critical supersaturation, $S_{cri}$. The $S_{cri}$ is defined as the lowest supersaturation at which sampled monodisperse particles can be activated. Continuous-flow thermal-gradient diffusion chambers (e.g. CTDC-type CCN counter, hereafter named as CTDC-CCNC), enable the development of a predefined supersaturation profile in a chamber (or CCN column) for exposing the aerosol particle to a single supersaturation value in the chamber (as described in U.S. Pat. No. 7,656,510; U.S. Pat. No. 6,529,272).

**Summary**

The invention is described by the independent claims. Embodiments of the invention are described by the dependent claims.

In one aspect, the invention relates to an apparatus for determining the concentration of cloud condensation nuclei over a first range of supersaturations. The apparatus comprises a thermal diffusion chamber comprising means maintaining a second range of supersaturations in the chamber. The apparatus further comprises an inlet unit comprising a first inlet. The first inlet comprises an upper end opening for receiving an aerosol flow and a lower end opening, wherein the lower end opening is wider than the upper end opening, wherein the lower end opening is configured for directing the aerosol flow into the chamber and exposing the aerosol flow to a sub-range of supersaturations of the second range. The sub-range is the first range. The apparatus further comprises an optical particle counter at an outlet of the chamber for determining the number concentration of the cloud condensation nuclei in the aerosol flow.

The thermal diffusion chamber is a (e.g. cylindrical) continuous-flow thermal-gradient diffusion chamber. The thermal diffusion chamber is configured to generate supersaturation by establishing a predefined temperature gradient so that the difference in water vapor and thermal diffusivity yield a supersaturation profile within or inside the chamber.

The optical particle counter (OPC) may be configured to employ standard light-scattering techniques to detect droplets at the outlet of the chamber.

The number concentration of the cloud condensation nuclei or concentration of the cloud condensation nuclei or CCN concentration or CCN number concentration refers to the number of activated particles per unit volume of aerosol. Using the concentration of the cloud condensation nuclei and the concentration of all particles in the aerosol flow, the CCN activity may be determined.

The ability of a given aerosol particle to act as a CCN (i.e. activate into a cloud droplet) is a function of its size, composition, and mixing state. Particle sample (aerosol flow) enters the chamber via the inlet unit and is exposed to supersaturation environment in the chamber in accordance with the present disclosure.

The fact that the lower end opening is wider than the upper end opening in the present apparatus may enable an effectively exposure of the aerosol particles to a range of supersaturations in the chamber and not only to a single supersaturation in a well redefined manner. This may provide an improved ultra-sensitive system with high temporal- and supersaturation-resolution, and better sensitivity. The temporal-resolution of the measurement may be higher than in existing systems, may be proportional to the number of diameters measured (2 minutes $\times$ number of diameters), and may theoretically be infinitely small if only 1 diameter is measured, making flight measurement of particle CCN activity possible. The supersaturation resolution may be much higher (e.g. < 0.001 % supersaturation), so that more applications, such as an application of retrieving could base supersaturation, may be used. Since the aerosol-to-sheath flow ratio is very close to 1 in the chamber, aerosol sample air may only be slightly diluted by the sheath air. The sensitivity may therefore be almost 10 times higher than the existing systems, which may make it possible to have air-borne measurement of size-resolved particle CCN activity at high altitude. For example, the present apparatus may be used in altitude from ground level to about 12 km (top of troposphere). Calibration of supersaturation (SS) may be done at controlled pressure and a pressure control module may be used for airborne measurement. The apparatus may be used in observatories and mobile platforms including airplane. This is by contrast to another chamber type that enables interaction of the aerosol flow with a single supersaturation value $S_{max}$ only. $S_{max}$ is the maximum value of the effective supersaturation in the chamber. In order to cover a range of supersaturations in the other chamber a repeated change of $S_{max}$ of the chamber may be needed. This may take about 1 to 5 minutes for stabilizing the supersaturation inside the other chamber after changing $S_{max}$. And, depending on the number of measured particle diameters, a complete scan of particle diameter and supersaturation may take more than 1 hour, which is too long for measurements of ambient CCN with high temporal variability (especially for airborne measurement). Moreover, particle number concentration is usually very low at high altitude, which may make it impossible to apply air-borne flight measurement of size-resolved particle CCN activity. In addition, with the other chamber only a few $S_{max}$ can practically be applied, leading to a very low supersaturation-resolution (about 0.1% of supersaturation) and a large uncertainty in the derived $S_{cri}$.

According to one embodiment, the inlet unit is further configured to receive a sheath flow and to direct the sheath flow along the inner surfaces of the chamber between the exposed aerosol flow and the inner surfaces. The sheath flow may be particle-free sheath flow that can be used to confine the aerosol sample to a desired range of supersaturation in the chamber, thereby increasing the precision of the measurement of the CCN concentration.

According to one embodiment, the sheath flow has a sheath flow rate smaller than a flow rate of the aerosol flow. For example, the sheath flow rate may be provided such that the aerosol-to-sheath flow ratio is very close to 1 in the chamber. This may enable an aerosol sample air which is only slightly diluted by the sheath air. The sensitivity may therefore be almost 10 times higher than the existing systems. This may make possible of air-borne measurement of size-resolved particle CCN activity at high altitude. This is by contrast to a chamber where the aerosol sample air is largely diluted (about 10 times) by the larger fraction of particle-free sheath air inside the chamber and thus requiring a high number concentration of monodispersed aerosol sample to limit the uncertainty of the measured CCN activity.

According to one embodiment, the first inlet is funnel shaped or conical shaped. This may enable an aerosol laminar flow in the chamber. Using the shape of the first inlet, the aerosol flow may expand smoothly. The curved shape of the inlet may provide a precise air flow control. The angle between vertical center line and inner wall of the funnel shape may not be too large, otherwise aerosol flow may detach from the wall of the inlet and may cause turbulence. For example, the angle of the funnel is smaller than 45 degree and preferably equal to 4.8 degree. Having, the angle small enough may keep a laminar flow of aerosol sample.

The diameter of the cross section of aerosol sample flow in the chamber is determined by the aerosol-to-total flow ratio. Higher flow ratio means larger supersaturation range. Therefore, flow ratio may be higher than 0.5 and preferably between 0.9 to 0.98.

According to one embodiment, the roughness of the inner surface of the first inlet that is used for directing the aerosol flow is smaller than 12.5 micrometer. Having an upper limit on the roughness may minimize air turbulence and particle loss in the chamber. The roughness refers to the surface roughness and may be quantified using the roughness parameter $R_a$.

According to one embodiment, the apparatus further comprises a humidifier located in a pathway of the sheath flow to the inlet unit and a humidifier located in a pathway of the aerosol flow to the inlet unit for separately controlling the humidity of the received sheath flow and the received aerosol flow. In the chamber, particles may continuously take water away, in particular dry particles may take a large amount of water. This may influence the SS profile in the chamber. Using the humidifier may reduce the consumption of water vapor by particles inside the chamber. Also, pre-humidified particles may reach equilibrium faster than dry particles in supersaturation condition in the chamber. The equilibrium refers to the saturation at the surface of the particles equaling to the saturation of the environment. For example, if the environment saturation is 1 (100% RH), humidified particles (having saturation at the surface = 0.9) get equilibrium faster than dry particles (saturation near surface < 0.3).

According to one embodiment, the relative humidity of each of the aerosol flow and sheath flow received at the inlet unit is higher than 80%. For example, the relative humidity of aerosol sample and sheath flow may be higher than 80% before entering the chamber, otherwise obtaining an equilibrium of the supersaturation distribution in the chamber after injecting the aerosol sample may take a considerable time.

According to one embodiment, the size of the lower end opening of the first inlet is between 82% and 93% of the inner diameter of the chamber. The upper end opening may for example be 3/8 or 1/4 inch.

The diameter or size of the lower end opening is chosen such that it may not be biased too much from the diameter of the cross section of aerosol sample flow in the chamber which is determined by aerosol-to-total flow ratio. For example, the diameter of the lower end opening may be defined by the flow ratio being used. The following table, gives example values in accordance with the present disclosure for the relative diameter which is the size of the lower end opening divided by the inner diameter of the chamber at different flow ratio. The diameter or size of the lower end opening may be chosen according to the table below for a certain flow ratio. Depending on the desired flow ratio, the size of the lower end opening may be at least 54.2% of the chamber's inner diameter. The preferred range of relative diameter is 0.827 to 0.927, corresponding to flow ratio from 90% to 98%. If the relative diameter is too low, the supersaturation range covered by aerosol flow may be very narrow. If the diameter of the lower end opening of the funnel biases too much from the diameter of the cross section of aerosol sample (e.g. biases too much from the number in the table below at a predefined flow ratio), turbulence may occur in the chamber.

| Flow ratio | 50% | 55% | 60% | 65% | 70% | 75% | 80% | 85% | 90% | 95% | 98% |
|---|---|---|---|---|---|---|---|---|---|---|---|
| Relative diameter | 0.542 | 0.574 | 0.606 | 0.640 | 0.673 | 0.708 | 0.744 | 0.783 | 0.827 | 0.881 | 0.927 |

According to one embodiment, the apparatus further comprises: a first mass flow rate control device located in the pathway of the sheath flow to the inlet unit and adapted to adjust the sheath flow to the inlet unit to a predefined volumetric sheath flow value and a second mass flow rate control device that is configured to receive both the sheath flow and the aerosol flow together from the outlet and that is further configured for adjusting the total of the aerosol flow and the sheath flow to a predefined volumetric total flow value. The apparatus is further adapted to control the ratio between the sheath flow at the outlet and the aerosol flow at the outlet exclusively via the first mass flow rate control device.

For example, the second mass flow control device may be configured to maintain a constant total flow rate (sheath + aerosol), and the flow ratio between sheath and aerosol flow may be controlled by the first mass flow control device. This may enable an optimal control of the flow rates.

According to one embodiment, the first mass flow rate control device comprises a first particle filter followed by a mass flow controller in the flow direction of the sheath flow.

According to one embodiment, the second mass flow rate control device comprises a second particle filter followed by a second mass flow controller in the flow direction of the aerosol flow and the sheath flow.

These embodiment may enable a precise flow rate with a simplified structure e.g. without need for differential pressure sensors that are sensitive to clogging by aerosol particles. Since the first and second mass flow rate controllers are located behind the first and second particle filters respectively, any partial or full clogging of the first and second mass flow rate controllers may be avoided. Clogging may inevitably lead to wrong measurement results and thus to a wrong control of the flow rates since the control of the flow rates depends on the measured flow rates.

According to one embodiment, the second flow rate control device further comprises a vacuum pump and a dryer for drying the sheath flow and aerosol flow that is to be received by the second mass flow controller.

According to one embodiment, the apparatus further comprises a second inlet for receiving an aerosol sample and an aerosol classifier for providing the received aerosol flow as a monodisperse aerosol flow from the aerosol sample.

According to one embodiment, the apparatus further comprises an aerosol dryer for drying the aerosol sample to a predefined relative humidity. According to one embodiment, the predefined relative humidity is smaller than 40%. This may enable an optimal classification of the particles in the aerosol flow and thus may enable a precise measurement of the CCN activity. The aerosol dryer may be located on the aerosol flow path before the classifier.

According to one embodiment, the apparatus further comprises a sample particle counter for determining the particle concentration in the selected aerosol flow, wherein the condensation particle counter is further configured for performing the determining the CCN activity from the ratio of the number concentration of the cloud condensation nuclei and the determined particle concentration.

According to one embodiment, the ratio of the lower end opening size to the upper end opening size is at least 2.3. This ratio may for example be dynamically controlled, by changing the size of the lower end opening and keeping constant the upper end opening size. The ratio is correlated to the supersaturation range to which the aerosol flow is exposed. This may enable an accurate and systematic analysis of the interaction of the aerosol flow in the chamber by dynamically changing the subrange of supersaturation via modifying values of the lower end opening size.

According to one embodiment, the first range of supersaturations is a radial non-uniform distribution of supersaturations. Having a non-uniform distribution of the su-perstations may increase the number of distinct supersaturations to which the aerosol particles are exposed. For example, this is by contrast to a uniform symmetric shape of supersaturations around a center value having a smaller number of distinct supersaturations.

In another aspect, the invention relates to a method for determining the concentration of cloud condensation nuclei over a first range of supersaturations by an apparatus. The apparatus comprising a thermal diffusion chamber comprising means maintaining a second range of supersaturations in the chamber. The apparatus comprises an inlet unit comprising a first inlet with an upper end opening for receiving an aerosol flow and a lower end opening, wherein the lower end opening is wider than the upper end opening. The apparatus further comprises an optical particle counter at an outlet of the chamber. The method comprises: directing the aerosol flow by the lower end opening into the chamber and exposing the aerosol flow to a sub-range of supersaturations of the second range, the sub-range being the first range; and determining by the condensation particle counter the concentration of the cloud condensation nuclei in the aerosol flow.

In another aspect, the invention relates to a supersaturation scanning CCN activity meter comprising an apparatus of previous embodiments. The meter further comprises computing means for calculating the CCN activity using the concentration of cloud condensation nuclei and the particle concentration.

It is understood that one or more of the aforementioned embodiments of the invention may be combined as long as the combined embodiments are not mutually exclusive.

**Brief description of the drawings**

In the following preferred embodiments of the invention are described in greater detail by way of example only, making reference to the drawings in which:

Figure 1     components of a broad supersaturation scanning CCN activity meter system in accordance with an example of the present disclosure,

Figure 2A     depicts the structure of an inlet unit in accordance with the present disclosure,

Figure 2B     depicts the plotting of aerosol activation fraction ($F_{act}$) against its critical supersaturation ($S_{cri}$),

Figure 3     illustrates the results of an example of application of the present apparatus,

Figure 4     is a flowchart of a method for measuring the critical supersaturation of aerosol particles.

**Detailed description**

In the following, like numbered elements in the figures are either similar elements or perform an equivalent function. Elements which have been discussed previously will not necessarily be discussed in later figures if the function is equivalent.

Various structures, systems and devices are schematically depicted in the figures for purposes of explanation only and so as to not obscure the present invention with details that are well known to those skilled in the art. Nevertheless, the attached figures are included to describe and explain illustrative examples of the disclosed subject matter.

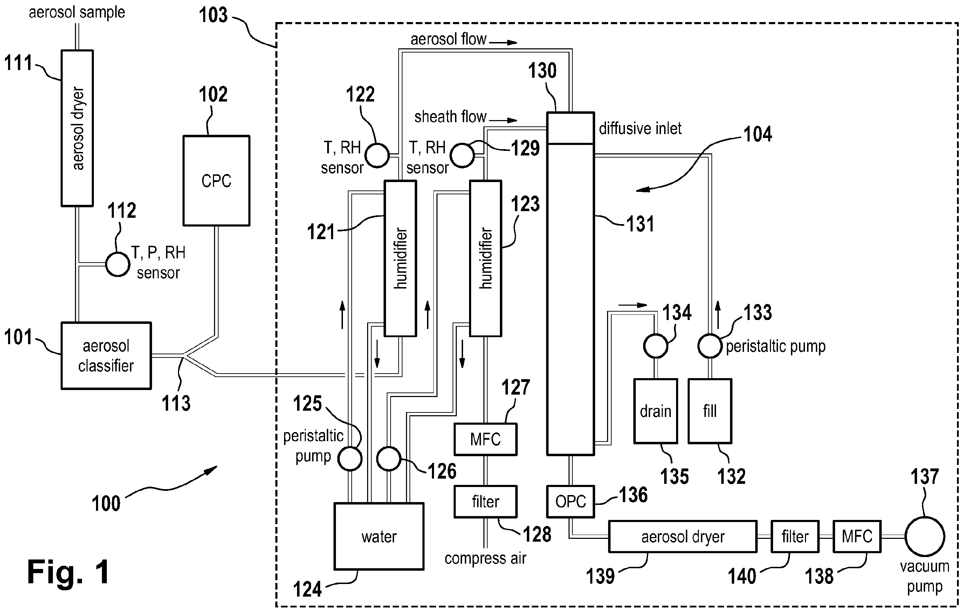

**Figure** 1 illustrates components of a broad supersaturation scanning CCN activity meter (BS2-CAM) system 100 in accordance with an example of the present disclosure. The BS2-CAM system 100 comprises an aerosol classifier 101, a condensation particle counter (CPC) 102, a CCN system 103, and components to maintain and monitor the working condition. Aerosol sample is firstly dried to e.g. relative humidity (RH) <30% with an aerosol dryer 111 before entering the aerosol classifier 101. The output of the aerosol classifier 101 may be a selected monodispersed aerosol.

A temperature, pressure and RH sensor 112 is placed in the aerosol flow pathway to monitor the temperature, pressure and RH of the aerosol sample. A Y-shaped splitter 113 is mounted at the outlet of the aerosol classifier 101 to split the selected monodispersed aerosol into two aerosol flows. The two aerosol flows are then fed into the CPC 102 and the CCN system 103.

An aerosol humidifier 121 is placed in the aerosol flow pathway to pre-humidify the monodispersed aerosol before it enters the apparatus 104. The temperature and RH of aerosol flow is measured with a T-RH sensor 122. Another humidifier 123 is placed in the sheath flow pathway to pre-humidify a sheath flow. The sheath flow is driven by compress air. And its volume flow rate is maintained at a set point by a mass flow controller 127. A particle filter 128 is placed upstream of the mass flow controller 127 to remove all particles in the sheath flow. The temperature and RH of the sheath flow is monitored by a T-RH sensor 129. Pure water is circulated between the two humidifiers 121 and 123 and a water reservoir 124 by two peristaltic pump 125 and 126.

Aerosol flow and sheath flow go into an inlet unit 130 of the apparatus 104. The inlet unit 130 may be a diffusive inlet. The aerosol flow and sheath flow enter a thermal diffusion chamber (or CCN column) 131 of the apparatus 104. The design of the thermal diffusion chamber 131 main body is similar as which presented in the prior art U.S. Pat. No. 6,529,272.

Pure water is fed into the thermal diffusion chamber 131 from a water fill bottle 132 with a peristaltic pump 133. Another peristaltic pump 134 is used to drain the water at the bottom of the thermal diffusion chamber 131 into a drain bottle 135.

An optical particle counter 136 is placed at the outlet of the thermal diffusion chamber 131 to count the number of activated particles.

The total flow in the CCN system 103 is maintained at a set point by a vacuum pump 137 and a mass flow controller 138. And the flow ratio between sheath and aerosol flow may be controlled by the mass flow controller 127. An aerosol dryer 139 and a particle filter 140 are placed between the optical particle counter 136 and the mass flow controller 138 to dry the flow and remove all particles.

The BS2-CAM system 100 may be connected to a computer system e.g. via connection means such as a bus, Ethernet, Internet etc. The computer system may be configured to perform at least part of the calculations of the CCN activity.

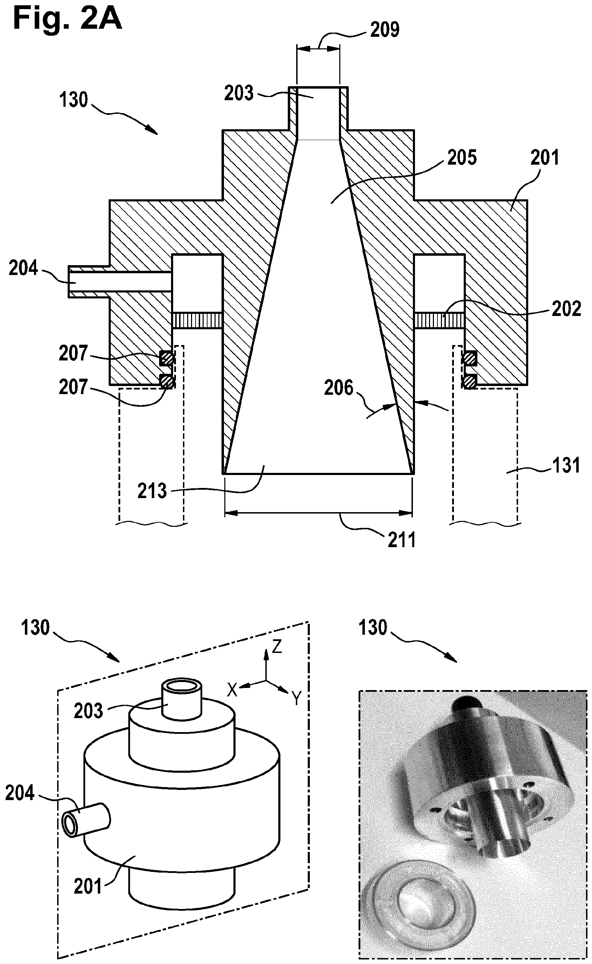

**Figure 2A** depicts a schematic diagram of an inlet e.g. the inlet unit 130 in accordance with the present disclosure. The inlet unit 130 includes a main body 201 and a sheath flow straightener 202. The main body 201 of the inlet unit 130 may be constructed from conductive materials like aluminum or stainless steel. An aerosol air inlet 203 is at the center top of the main body 201. Downstream of the aerosol air inlet 203 is a funnel-shaped region 205 where the cross section of aerosol flow is expanded smoothly. The angle 206 of the wall of the funnel-shaped region 205 is small enough to keep a laminar flow of aerosol air. The wall of the funnel-shaped region 205 is polished to minimize air turbulence and particle deposition. The aerosol air inlet 203 and the downstream funnel shaped region 205 form a first inlet 213 in accordance with the present disclosure. The first inlet 213 comprises an upper end opening 209 for receiving an aerosol flow and a lower end opening 211. The lower end opening 209 is wider than the upper end opening 211.

A sheath air inlet 204 is at the side of the main body 201. A flow straightener 202 is located downstream of sheath air inlet 204. The flow straightener 202 may be a single or double screen of fine nylon mesh, which straightens the sheath flow and lead to a laminar flow. The chamber inlet can be mounted at the top of the thermal diffusion chamber 131. At the lower end of the main body 201 there are two rubber O-rings 207 to keep the chamber air-tight.

Figure 2A also depicts a front perspective view of the inlet unit 130 and a picture of the inlet unit 130.

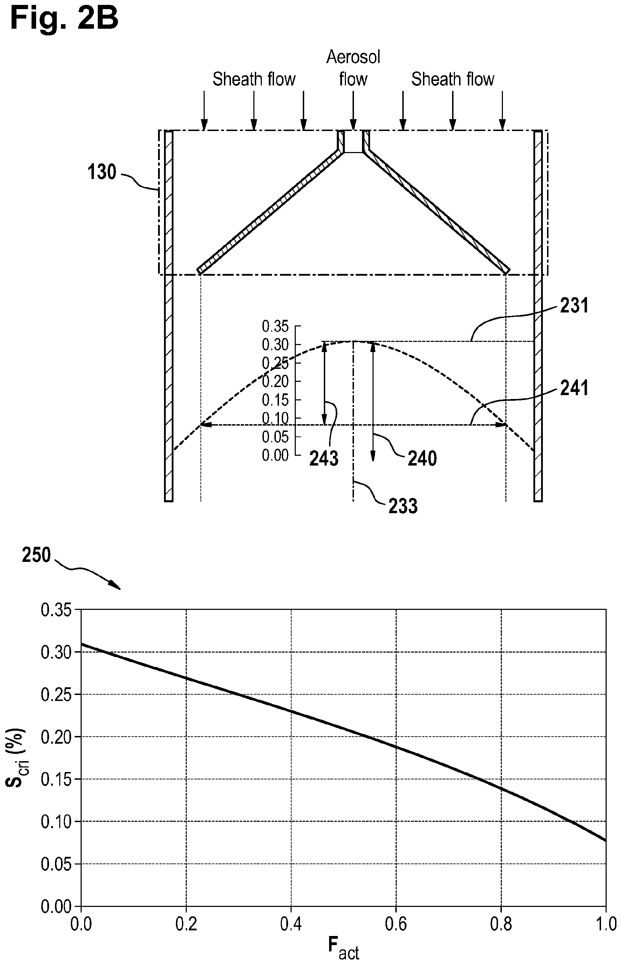

**Figure 2B** shows a diagram illustrating the distribution 230 of the supersaturation in thermal diffusion chamber 131 of the apparatus 104. In the chamber 131, the highest equivalent supersaturation ($S_{max}$) is achieved at the centerline 233, and the supersaturation near the wall is 0. Particle sample (or aerosol flow) is exposed to supersaturation environment in the chamber, and the activated particles are counted by the optical particle counter 136 at the end of the chamber 131. The chamber provides a supersaturation range 240 between 0 and $S_{max}$ 231.

With the present structure of the first inlet 213, the monodispersed aerosol is guided to a broad cross section 241 (very close to the wall) in the chamber 131. This enables the monodispersed aerosol entering the chamber 131 to be exposed to a range of supersaturation 243 simultaneously.

Critical supersaturation, $S_{cri}$, defined as the lowest supersaturation at which sampled monodisperse particles can be activated, is a physical property of aerosol particles, and a critical parameter in predicting CCN number concentration and addressing cloud-related effects in numerical models. By exposing the monodispersed particles to a single supersaturation e.g. $S_{max}$, in a given chamber, the CCN activity measurement is limited to the particles having the same $S_{cri}$ e.g. having a similar diameter. In order to cover other diameters, the given chamber may be configured in order to adapt the value of $S_{max}$ in the given chamber each time a new $S_{cri}$ is to be covered. This may take a long time.

With the present disclosure, and in particular the chamber 131, multiple $S_{cri}$ are processed at once (in one run) by exposing the monodispersed particles to the range of supersaturations 243. In this case, the activation fraction $F_{act}$ can be defined or modeled as follows for monodispersed aerosol particles with same $S_{cri}$:

$$F_{act} = \frac{N_{act}}{V_a \rho_a} = \frac{2\pi \int_0^{r_a} g\left(S_{cri} - S_{chamber}\right) \rho_a v_a r dr}{V_a \rho_a} \text{, in which } g\left(x\right) = \begin{cases} 1 & \text{if } x \le 0 \\ 0 & \text{if } x > 0 \end{cases} \quad (1)$$

where, $N_{act}$ is the number concentration of activated particles measured by the OPC 136 at the end of the chamber 131; $V_a$ is aerosol volume flow rate in the chamber 131; $\rho_a$ is the number concentration of the monodispersed aerosol particles which can be measured with the CPC 102; $r_a$ is the cross section 241 radius of aerosol flow; $v_a$ is the flow velocity in the chamber 131 and is a function of r. $F_{act}$ can, in particular the first ration of equation (1) may be measured using the present apparatus.

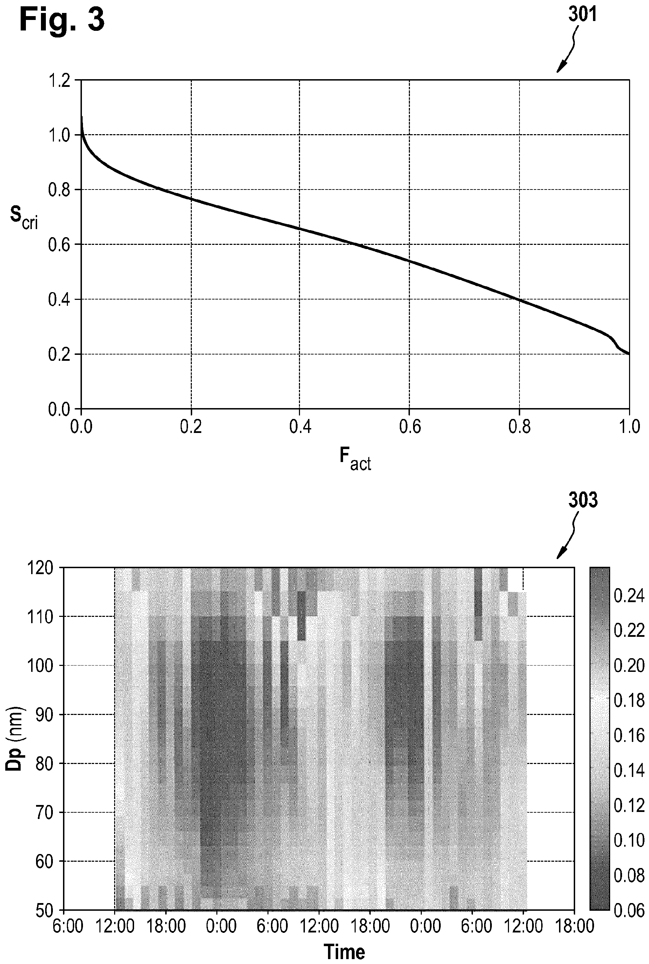

Figure 2B shows the plot 250 of Eq. (1) indicating the particle activation fraction $F_{act}$ as function of its critical supersaturation $S_{cri}$. The monotonic dependence of $F_{act}$ on $S_{cri}$ suggests that $S_{cri}$ of sample particles can be directly determined once $F_{act}$ is measured. For a given profile of supersaturation 230, the $F_{act}$-$S_{cri}$ relation may be fixed and can be determined by calibration as described in one example of Figure 3. Compared with the above example it is not necessary to apply a series of $S_{max}$ to get $S_{cri}$ of aerosol samples.

Plot 250 may for example be obtained via a CFD simulation of the flow in the chamber, at predefined boundary conditions. For example, a model may be provided such that it may output a 3-dimanesional distribution of the flow velocity, temperature, pressure, RH etc. in the chamber. Figure 2B may provide a theoretical distribution obtained from CFD simulation, to help users better understanding the principle of the apparatus. The CFD simulation may only be applied during the design stage of the apparatus. Since the simulation of the SS distribution is very sensitive on the boundary conditions that may not be well defined, the simulated SS distribution might be biased from the true one. Thus, the SS distribution may be calibrated by well-known salt particles and get the calibration curve shown as 301. Curve 301 may always be used for the determination of CCN activity from Fact.

**Figure** 3 provides results of an application example of the present apparatus. A TSI aerosol size classifier (Model 3080; TSI, Inc., Shoreview, MN USA) and a TSI water CPC (Model 3788; TSI, Inc., Shoreview, MN USA) were used in the BS2-CAM 100. The main body of the chamber 131 (with thermal control and monitor devices) and the OPC 136 may be modified from a DMT CTDC-CCNC (Model CCN100, Droplet Measurement Technologies, USA). The inlet unit 130 is provided as an aluminum diffusive inlet unit in accordance with the present invention. The rest parts of BS2-CAM (flow maintaining, water supply, humidifying and drying modules) were setup according to Figure 1. A software package was also built based on MATLAB® for data processing.

The supersaturation distribution 230 was fixed by setting temperature gradient in the chamber to a fixed value. The aerosol flow rate was set to 0.47 L/min and the sheath flow rate was set to 0.03 L/min. The $F_{act}$-$S_{cri}$ relation as shown in graph 301 was calibrated with ammonium sulfate particles. It can be seen that the $F_{act}$-$S_{cri}$ relation is nearly linear. With $F_{act}$ varying between 0 and 1, $S_{cri}$ covers a supersaturation range from 0.2% to 1%. These are also the lower and upper limits of $S_{cri}$ which can be measured with the present apparatus. These limits can be adjusted by setting different values of temperature gradient in the chamber 131.

After getting $F_{act}$ from the instrument, $S_{cri}$ can be obtained from the calibration curve 301 directly. The calibration may be performed as follows. The $F_{act}$ of NaCl or (NH4)2SO4 particles with known hygroscopicity and a certain diameter may be obtained by performing ambient measurements and may be obtained using calibration. The $S_{cri}$ of the particles can be calculated by Kohler theory. Therefore the $S_{cri}$ corresponding to $F_{act}$ obtained from calibration is known. By repeating the above measurement for particles with different diameters, the calibration curve 301 is obtained and can be used for ambient measurement. Calibration and ambient measurement may be performed under same conditions. During calibration, for certain well-known salt particles with predefined diameter, Fact is obtained from the measurement and Scri is calculated with Koehler model. This may result in the calibration curve 301. During ambient measurement, Fact may be obtained from the measurement, and the calibration curve 301 may be used to obtain the Scri of the particles measured.

For example, the difference between the calibration and the ambient measurement lies in the kind of particles feed into the system and in data processing. For the calibration, the value of $S_{cri}$ of the particles measured is known and thus from each measurement, one point may be fixed or provided on the calibration curve 301. In ambient measurements, the properties of the particles measured may not be known. The measurement provides a value of $F_{act}$ and calibration curve 301 may be used to obtain the $S_{cri}$ of the particles whose Fact is measured.

Plot 301 may be obtained via calibration with pure ammonian sulfate particles. Since the hygroscopicity of ammonian sulfate is well known, the supersaturation distribution can be retrieved from the calibration result.

The BS2-CAM system 100 was also tested with ambient particles. Size-resolved hygroscopicity parameter $\kappa$ for particles with diameter from 50 to 120 nm was measured for 48 hours. Plot 303 of Figure 3 shows the time series of the size-resolved $\kappa$. A clear diurnal variation can be found in the data, with higher values in daytime and lower values in nighttime, indicating the variation of particle chemical composition. Plot 303 is a is a contour plot of hygroscopicity parameter $\kappa$ at different particle sizes and time of the measurement. The color indicates the value of hygroscopicity parameter $\kappa$.

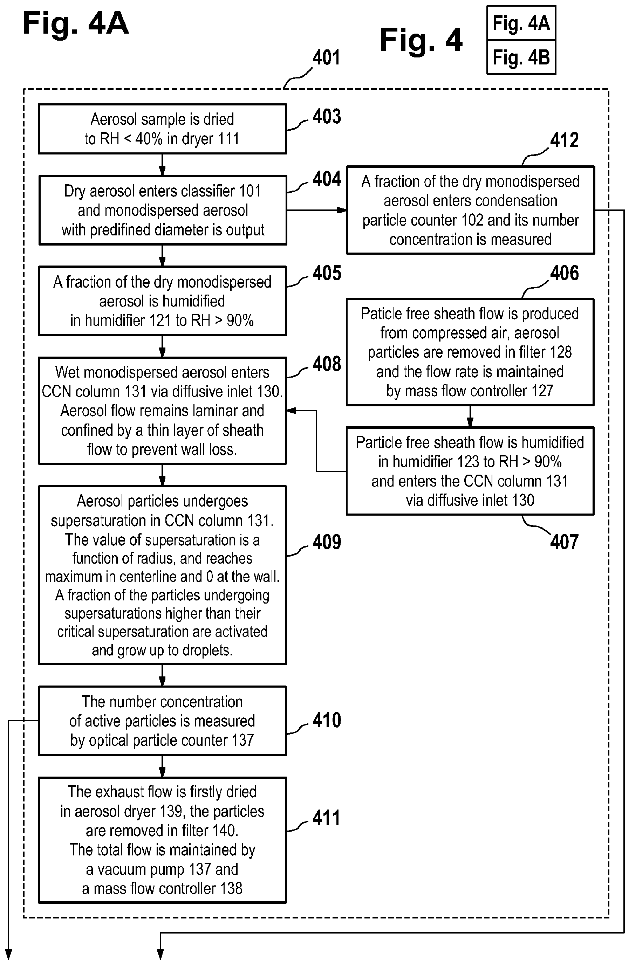

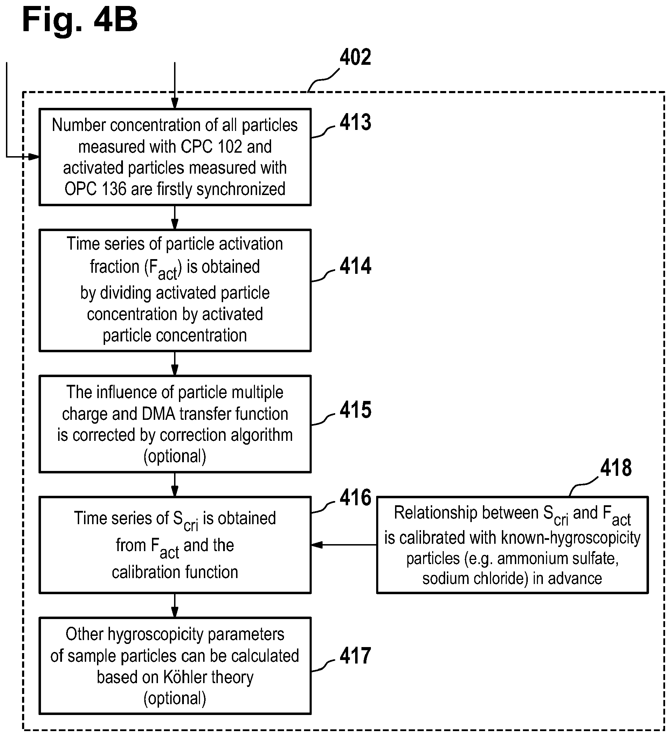

**Figure 4** is a flowchart of a method for measuring the critical supersaturation of aerosol particles. The flowchart comprises a first flowchart 401 of a method for performing measurement and a second flowchart 402 of a method for performing data evaluation. In step 403, an aerosol sample is dried to RH < 40% in dryer 111. In step 404, dry aerosol enters the classifier 101 and monodispersed aerosol with predefined diameter is output. A predefined first fraction of the dry monodispersed aerosol is humidified in step 405 in humidifier 121 to RH > 90%. In step 406, particle free sheath flow is produced from compressed air, where aerosol particles are removed in filter 128 and the flow rate and in particular the flow ratio between sheath and aerosol flow is controlled or maintained by the mass flow controller 127. The particle free sheath flow is humidified in step 407 in humidifier 123 to RH > 90% and enters the chamber 131 via the inlet unit 130. Wet monodispersed aerosol enters in step 408 the chamber 131 via the inlet unit 130. Aerosol flow remains laminar and confined by a thin layer of sheath flow to prevent wall loss. Aerosol particles undergoes in step 409 supersaturation in the chamber 131. The value of supersaturation is a function of radius, and reaches maximum in centerline and 0 at the wall. A fraction of the aerosol particles undergoing supersaturations higher than their critical supersaturation are activated and grow up to droplets. The number concentration of activated aerosol particles is measured in step 410 by the optical particle counter 136. In step 411, the exhaust flow is firstly dried in aerosol dryer 139 and the particles are removed in filter 138. The total flow in maintained by the vacuum pump 137 and the mass flow controller 138.

A second fraction of the dry monodispersed aerosol enters the CPC 102 and its number concentration is measured in step 412. Number concentration of all particles measured with the CPC 102 and activated particles measured with OPC 136 in step 410 are firstly synchronized in step 413. The synchronization may for example be performed by defining the difference between the time of particles to travel from aerosol classifier 101 to CPC and the time to travel from aerosol classifier 101 to the OPC. The difference is defined before the ambient measurement is performed. The two time series output from CPC and OPC can be matched in time considering the predefined time difference. Time series of particle activation fraction (Fact) is obtained in step 414 by dividing activated particle concentration by activated particle concentration. Optionally, the influence of particle multiple charge and transfer function of the aerosol classifier may be corrected by a predefined correction algorithm in step 415. Time series of Scri is obtained in step 416 from Fact and the calibration function, wherein the calibration function may be obtained in advance as a relationship between Scri and Fact which is calibrated with known-hygroscopicity particles (e.g. ammonium sulfate, sodium chloride) in step 418. Optionally, in step 417, other hygroscopicity parameters of sample particles can be calculated based on Khöler theory.

**Reference Numerals**

| | |
|---|---|
| 100 | BS2-CAM system |
| 101 | aerosol classifier |
| 102 | CPC |
| 103 | CCN system |
| 104 | Apparatus |
| 111 | Aerosol dryer |
| 112 | RH, T, P sensor |
| 113 | Y-shaped splitter |
| 121 | Aerosol humidifier |
| 122 | T-RH sensor |
| 123 | Humidifier |
| 124 | Water reservoir |
| 125 | Peristaltic pump |
| 126 | Peristaltic pump |
| 127 | flow controller |
| 128 | particle filter |
| 129 | T-RH sensor |
| 130 | inlet unit |
| 131 | diffusion chamber |
| 132 | fill bottle |
| 133 | peristaltic pump |
| 134 | peristaltic pump |
| 135 | drain bottle |
| 136 | particle counter |
| 137 | vacuum pump |
| 138 | flow controller |
| 139 | aerosol dryer |
| 140 | particle filter |
| 201 | main body |
| 202 | flow straightener |
| 203 | aerosol air inlet |
| 204 | sheath air inlet |
| 205 | funnel-shaped region |
| 206 | angle |
| 207 | rubber O-rings |
| 209 | upper end opening |
| 211 | lower end opening |
| 213 | first inlet |
| 230 | distribution |
| 231 | Smax |
| 240 | supersaturation range |
| 241 | cross section of aerosol sample flow |
| 243 | range supersaturations |
| 301 | calibration curve |
| 303 | plot |
| 401-418 | method steps. |

**Claims**

1. An apparatus (104) for determining the concentration of cloud condensation nuclei over a first range (243) of supersaturations, the apparatus (104) comprising a thermal diffusion chamber (131) comprising means maintaining a second range (240) of supersaturations in the chamber (131), the apparatus (104) comprising an inlet unit (130) comprising a first inlet (213), the first inlet (213) comprising an upper end opening (209) for receiving an aerosol flow and a lower end opening (211), wherein the lower end opening (211) is wider than the upper end opening (209), wherein the lower end opening (211) is configured for directing the aerosol flow into the chamber (131) and exposing the aerosol flow to a sub-range (243) of supersaturations of the second range (240), the sub-range being the first range (243), the apparatus (104) further comprising an optical particle counter (136) at an outlet of the chamber (131) for determining the number concentration of the cloud condensation nuclei in the aerosol flow.

2. The apparatus of claim 1, the inlet unit (130) being further configured to receive a sheath flow and to direct the sheath flow along inner surfaces of the chamber (131) between the exposed aerosol flow and the inner surfaces.

3. The apparatus of claim 2, wherein the sheath flow has a sheath flow rate smaller than a flow rate of the aerosol flow.

4. The apparatus of any of the preceding claims, wherein the first inlet (213) is funnel shaped or conical shaped.

5. The apparatus of any of the preceding claims, wherein the roughness of the inner surface of the first inlet (213) that is used for directing the aerosol flow is smaller than 12.5 micrometer.

6. The apparatus of any of the preceding claims 2-5, further comprising a humidifier (121) located in a pathway of the sheath flow to the inlet unit (130) and a humidifier (123) located in a pathway of the aerosol flow to the inlet unit (130) for separately controlling the humidity of the received sheath flow and the received aerosol flow.

7. The apparatus of claim 6, wherein the relative humidity of each of the aerosol flow and sheath flow received at the inlet unit (130) is higher than 80%.

8. The apparatus of any of the previous claims, wherein the size of the lower end opening (211) is between 82% and 93% of the inner diameter of the chamber (131).

9. The apparatus of any of the preceding claims 2-8, further comprising

   - a first mass flow rate control device (127-128) located in the pathway of the sheath flow to the inlet unit (130) and adapted to adjust the sheath flow to the inlet unit (130) to a predefined volumetric sheath flow value; and
   - a second flow rate control device (138-140) that is configured to receive both the sheath flow and the aerosol flow together from the outlet and that is further configured for adjusting the total of the aerosol flow and the sheath flow to a predefined volumetric total flow value,

   the apparatus (100) being further adapted to control the ratio between the sheath flow at the outlet and the aerosol flow at the outlet exclusively via the first mass flow rate control device (127-128).

10. The apparatus of claim 9, wherein the first mass flow rate control device (127-128) comprises a first particle filter (128) followed by a mass flow controller (127) in the flow direction of the sheath flow.

11. The apparatus of claim 9 or 10, wherein the second flow rate control device (138-140) comprises a second particle filter (140) followed by a second mass flow controller (138) in the flow direction of the aerosol flow and the sheath flow.

12. The apparatus of claim 11, wherein the second flow rate control device (138-140) further comprises a pump (137) and a dryer (139) for drying the sheath flow and aerosol flow that is to be received by the second mass flow controller (138-140).

13. The apparatus of any of the preceding claims, further comprising

   - a second inlet for receiving an aerosol sample and
   - an aerosol classifier (101) for providing the received aerosol flow as a monodispersed aerosol flow obtained from the aerosol sample.

14. The apparatus of any of claim 13, further comprising an aerosol dryer (111) for drying the aerosol sample to a predefined relative humidity.

15. The apparatus of claim 14, wherein the predefined relative humidity is smaller than 40%.

16. The apparatus of any of the preceding claims 13-15, further comprising a sample particle counter (102) for determining the particle concentration in the monodispersed aerosol flow, wherein the apparatus (100) is further configured for performing determining the CCN activity from the ratio of the number concentration of the cloud condensation nuclei and the determined particle concentration.

17. The apparatus of any of the preceding claims, wherein the ratio of the lower end opening size to the upper opening end size is at least 2.3.

18. The apparatus of any of the preceding claims, wherein the first range of supersaturations is a radial non-uniform distribution of supersaturations.

19. A supersaturation scanning CCN activity meter (100) comprising an apparatus of claims 16-18, the meter further comprising computing means for calculating the CCN activity using the number concentration of cloud condensation nuclei and the particle concentration.

20. A method for determining the concentration of cloud condensation nuclei over a first range (243) of supersaturations by an apparatus (104), the apparatus (104) comprising a thermal diffusion chamber (131) comprising means maintaining a second range (240) of supersaturations in the chamber (131), the apparatus (104) comprising an inlet unit (130) comprising a first inlet (213) with an upper end opening (209) for receiving an aerosol flow and a lower end opening (211), wherein the lower end opening (211) is wider than the upper end opening (209), the apparatus (104) further comprising an optical particle counter (136) at an outlet of the chamber (131), the method comprising:

- directing the aerosol flow by the lower end opening (209) into the chamber (131) and exposing the aerosol flow to a sub-range (243) of supersaturations of the second range (240), the sub-range being the first range (243); and

determining by the optical particle counter (136) the number concentration of the cloud condensation nuclei in the aerosol flow.

**Fig. 1**

aerosol sample — 111 aerosol dryer

112 T, P, RH sensor

101 aerosol classifier

102 CPC

113

100

103

104 diffusive inlet

131

130 aerosol flow →

129 sheath flow →

122 T, RH sensor

123 humidifier

121 humidifier

T, RH sensor

127 MFC

128 filter — compress air

126

125 peristaltic pump

124 water

136 OPC

134 / 135 drain

133 peristaltic pump

132 fill

137 vacuum pump

138 MFC

140 filter

139 aerosol dryer

# Fig. 2A

# Fig. 2B

## Fig. 3

301

303

# Fig. 4A

## Fig. 4

| Fig. 4A |
|---------|
| Fig. 4B |

**401**

**403** — Aerosol sample is dried to RH < 40% in dryer 111

**404** — Dry aerosol enters classifier 101 and monodispersed aerosol with predifined diameter is output

**412** — A fraction of the dry monodispersed aerosol enters condensation particle counter 102 and its number concentration is measured

**405** — A fraction of the dry monodispersed aerosol is humidified in humidifier 121 to RH > 90%

**408** — Wet monodispersed aerosol enters CCN column 131 via diffusive inlet 130. Aerosol flow remains laminar and confined by a thin layer of sheath flow to prevent wall loss.

**406** — Paticle free sheath flow is produced from compressed air, aerosol particles are removed in filter 128 and the flow rate is maintained by mass flow controller 127

**407** — Particle free sheath flow is humidified in humidifier 123 to RH > 90% and enters the CCN column 131 via diffusive inlet 130

**409** — Aerosol particles undergoes supersaturation in CCN column 131. The value of supersaturation is a function of radius, and reaches maximum in centerline and 0 at the wall. A fraction of the particles undergoing supersaturations higher than their critical supersaturation are activated and grow up to droplets.

**410** — The number concentration of active particles is measured by optical particle counter 137

**411** — The exhaust flow is firstly dried in aerosol dryer 139, the particles are removed in filter 140. The total flow is maintained by a vacuum pump 137 and a mass flow controller 138

# Fig. 4B

**402**

**413** — Number concentration of all particles measured with CPC 102 and activated particles measured with OPC 136 are firstly synchronized

**414** — Time series of particle activation fraction ($F_{act}$) is obtained by dividing activated particle concentration by activated particle concentration

**415** — The influence of particle multiple charge and DMA transfer function is corrected by correction algorithm (optional)

**416** — Time series of $S_{cri}$ is obtained from $F_{act}$ and the calibration function

**418** — Relationship between $S_{cri}$ and $F_{act}$ is calibrated with known-hygroscopicity particles (e.g. ammonium sulfate, sodium chloride) in advance

**417** — Other hygroscopicity parameters of sample particles can be calculated based on Köhler theory (optional)

Europäisches
Patentamt

European
Patent Office

Office européen
des brevets

# EUROPEAN SEARCH REPORT

Application Number

EP 18 17 2915

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/020362 A1 (HERING SUSANNE VERA [US] ET AL) 5 February 2004 (2004-02-05) | 1-5,8, 17,18,20 | INV. G01N15/06 |
| Y | * paragraph [0006] * <br> * paragraph [0017] * <br> * paragraph [0029] * <br> * paragraph [0030] * <br> * paragraph [0031] * <br> * paragraph [0044] * <br> * figure 1A * <br> * figure 2 * <br> * paragraph [0045] * <br> ----- | 6,7, 9-16,19 | |
| Y,D | US 2006/126056 A1 (ROBERTS GREGORY C [US]) 15 June 2006 (2006-06-15) <br> * paragraph [0032] * <br> * paragraph [0045] * <br> * figure 3 * <br> ----- | 6,7, 9-16,19 | |
| A | US 2017/276589 A1 (OBERREIT DEREK [US]) 28 September 2017 (2017-09-28) <br> * paragraph [0076] * <br> * figure 4 * <br> ----- | 1-20 | |

| | TECHNICAL FIELDS SEARCHED (IPC) |
|---|---|
| | G01N |

The present search report has been drawn up for all claims

| Place of search | Date of completion of the search | Examiner |
|---|---|---|
| The Hague | 20 November 2018 | Traversa, Marzia |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

......................................................................

& : member of the same patent family, corresponding
  document

EPO FORM 1503 03.82 (P04C01)

## ANNEX TO THE EUROPEAN SEARCH REPORT
## ON EUROPEAN PATENT APPLICATION NO.

EP 18 17 2915

This annex lists the patent family members relating to the patent documents cited in the above-mentioned European search report.
The members are as contained in the European Patent Office EDP file on
The European Patent Office is in no way liable for these particulars which are merely given for the purpose of information.

20-11-2018

| Patent document cited in search report | Publication date | Patent family member(s) | Publication date |
|---|---|---|---|
| US 2004020362 A1 | 05-02-2004 | DE 10392241 T5<br>US 2004020362 A1<br>WO 03065005 A2 | 17-02-2005<br>05-02-2004<br>07-08-2003 |
| US 2006126056 A1 | 15-06-2006 | AU 2003272479 A1<br>US 2006126056 A1<br>WO 2004027380 A2 | 08-04-2004<br>15-06-2006<br>01-04-2004 |
| US 2017276589 A1 | 28-09-2017 | US 2017276589 A1<br>WO 2017165671 A1 | 28-09-2017<br>28-09-2017 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7656510 B

- US 6529272 B